# EUROPEAN PATENT APPLICATION

(11) **EP 4 296 958 A1**
(43) Date of publication of application: **27.12.2023**
(21) Application number: 22756041.4
(22) Date of filing: 09.02.2022
(51) Int. Cl.: G06T 15/00, G06T 15/20, G06T 19/00, H04N 13/111, H04N 13/194, H04N 21/234, H04N 21/24

(54) **INFORMATION PROCESSING DEVICE, INFORMATION PROCESSING METHOD, AND PROGRAM**

(30) Priority: 18.02.2021 JP 2021024134
(71) Applicant: CANON KABUSHIKI KAISHA, Tokyo 146-8501 (JP)
(72) Inventor: MAEDA Mitsuru, Tokyo 146-8501 (JP); OKABE Koji, Tokyo 146-8501 (JP); KAMEI Hidekazu, Tokyo 146-8501 (JP); FUNAKI Hinako, Tokyo 146-8501 (JP); OTA Yuya, Tokyo 146-8501 (JP); OGASAWARA Taku, Tokyo 146-8501 (JP); ONUMA Kazufumi, Tokyo 146-8501 (JP)
(74) Representative: Canon Europe Limited
(86) International application number: PCT/JP2022/004992
(87) International publication number: WO 2022/176720

(57) **Abstract**

An information processing apparatus identifies a sub region of an object 210, displayed in a virtual viewpoint image representing a view from a virtual viewpoint, based on virtual viewpoint information, and outputs division model data corresponding to the identified sub region out of foreground model data.

## Description

### Technical Field

The present disclosure relates to a technique for transmitting three-dimensional shape data.

### Background Art

In recent years, there has been noticed a technique for performing synchronized image capturing at multiple viewpoints by using a plurality of cameras installed at different positions and generating a virtual viewpoint image by using a plurality of images obtained through the image capturing. The technique for generating a virtual viewpoint image based on a plurality of images allows a user to view highlight scenes of, for example, soccer and basketball games, from various angles, thereby giving the user a high sense of realism compared to normal images.

PLT 1 discloses a system for generating a virtual viewpoint image based on a plurality of images. More specifically, the system generates three-dimensional shape data representing a three-dimensional shape of an object based on a plurality of images. The system generates a virtual viewpoint image representing the view from a virtual viewpoint by using the three-dimensional shape data.

### Citation List

### Patent Literature

PTL1: WO2018/147329

### Summary of Invention

### Technical Problem

There has been a demand for generating a virtual viewpoint image. According to the demand, for example, three-dimensional shape data generated by a server is transmitted to a client terminal, and a virtual viewpoint image is generated by the client terminal. However, three-dimensional shape data requires a large amount of data and therefore allocates a wide bandwidth for data transmission, possibly causing a cost increase. In addition, three-dimensional shape data requires a long transmission time and hence time is taken to display a virtual viewpoint image, posing an issue of the degraded frame rate of the virtual viewpoint image. Similar problems arise not only in a case of generating a virtual viewpoint image on a client terminal but also in a case of transmitting three-dimensional shape data.

The present disclosure is directed to reducing the load on three-dimensional shape data transmission.

### Solution to Problem

An information processing apparatus according to the present disclosure includes first acquisition means for acquiring virtual viewpoint information for identifying a position of a virtual viewpoint and a line-of-sight from the virtual viewpoint, second acquisition means for acquiring three-dimensional shape data of an object, identification means for identifying a sub region of the object to be displayed in a virtual viewpoint image representing a view from the virtual viewpoint, based on the virtual viewpoint information acquired by the first acquisition means, and output means for outputting partial data corresponding to the sub region identified by the identification means out of the three-dimensional shape data acquired by the second acquisition means. Advantageous Effects of Invention

According to the present disclosure, the load on three-dimensional shape transmission can be reduced.

### Brief Description of Drawings

[Fig. 1] Fig. 1 illustrates an example configuration of a virtual viewpoint image generation system including a three-dimensional information processing apparatus according to a first exemplary embodiment.
[Fig. 2] Fig. 2 illustrates an example of a camera arrangement.
[Fig. 3A] Fig. 3A illustrates an example of a method for dividing a foreground model.
[Fig. 3B] Fig. 3B illustrates an example of a method for dividing a foreground model.
[Fig. 4] Fig. 4 illustrates an example of a method for dividing a background model.
[Fig. 5] Fig. 5 illustrates an example data structure of a foreground model to be stored.
[Fig. 6] Fig. 6 illustrates an example data structure of a foreground model to be stored.
[Fig. 7] Fig. 7 illustrates an example data structure of a foreground model to be stored.
[Fig. 8] Fig. 8 illustrates an example data structure of a foreground model to be stored. [Fig. 9] Fig. 9 illustrates an example data structure of a background model to be stored.
[Fig. 10] Fig. 10 illustrates an example data structure of a background model to be stored. [Fig. 11] Fig. 11 is a flowchart illustrating processing of the virtual viewpoint image generation system according to the first exemplary embodiment.
[Fig. 12] Fig. 12 illustrates a status of communication between different units of the virtual viewpoint image generation system according to the first exemplary embodiment.
[Fig. 13] Fig. 13 illustrates an example configuration of the virtual viewpoint image generation system including a three-dimensional information processing apparatus according to a second exemplary embodiment.
[Fig. 14] Fig. 14 illustrates an example of a method for dividing a foreground model according to the second exemplary embodiment.
[Fig. 15] Fig. 15 is a flowchart illustrating processing of the virtual viewpoint image generation system according to the second exemplary embodiment.
[Fig. 16] Fig. 16 illustrates another example data structure of the foreground model to be stored.
[Fig. 17] Fig. 17 is a block diagram illustrating an example hardware configuration of the three-dimensional information processing apparatus.

### Description of Embodiments

Exemplary embodiments of the present disclosure will be described in detail below with reference to the accompanying drawings. The following exemplary embodiments do not limit the present disclosure. Not all of the combinations of the features described in the exemplary embodiments are indispensable to the solutions for the present disclosure. A virtual viewpoint image refers to an image generated by a user and/or a full-time operator by freely operating the position and orientation of a virtual camera, representing the view from a virtual viewpoint. The virtual viewpoint image is also referred to as a free viewpoint image or an arbitrary viewpoint image. The present disclosure will be described below centering on a case where the virtual viewpoint is specified by a user operation, the virtual viewpoint may also be automatically specified based on a result of image analysis. Unless otherwise noted, the following descriptions will be made on the premise that the term "image" includes the concept of both a moving image and a still image.

A virtual camera is a camera different from a plurality of imaging apparatuses actually disposed around an imaging region, and refers to a concept for conveniently explaining a virtual viewpoint related to the generation of a virtual viewpoint image. More specifically, a virtual viewpoint image can be considered as an image captured from a virtual viewpoint set in a virtual space related to the imaging region. Then, the position and orientation of a viewpoint in the virtual image capturing can be represented as the position and orientation of the virtual camera. In other words, assuming that a camera exists at the position of the virtual viewpoint set in the space, a virtual viewpoint image refers to an image that simulates a captured image acquired by the camera. According to the present exemplary embodiment, the transition of the virtual viewpoint over time is referred to as a virtual camera path. However, it is not prerequisite to use the concept of the virtual camera to implement the configuration of the present exemplary embodiment. More specifically, it is only necessary to set at least information representing a specific position in the space and information representing the orientation, and generate a virtual viewpoint image based on the set information.

An imaging apparatus needs to be provided with a physical camera (real camera). The imaging apparatus may also be provided with various image processing functions in addition to the physical camera. For example, the imaging apparatus may also be provided with a processing unit for performing foreground and background separation processing. The imaging apparatus may also be provided with a control unit for controlling the transmission of images of partial regions out of captured images. The imaging apparatus may also be provided with a plurality of physical cameras.

### (First Exemplary Embodiment)

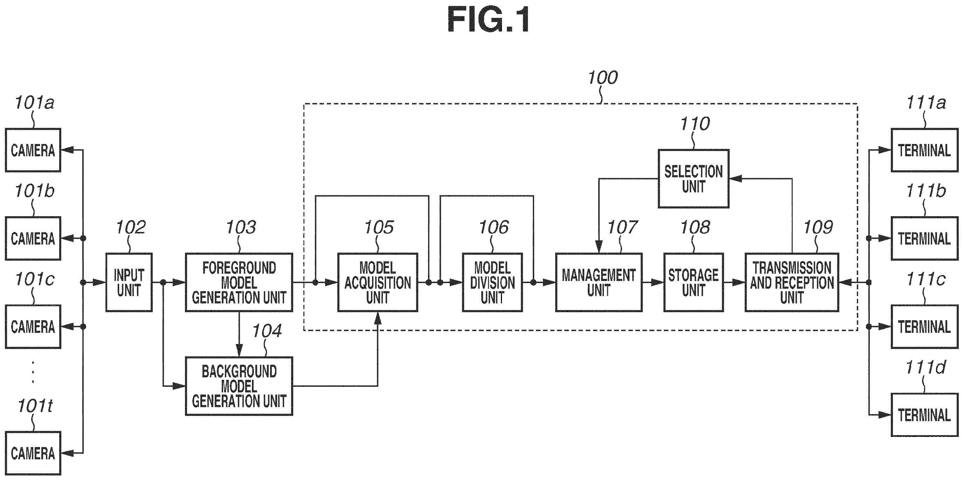

A three-dimensional information processing apparatus 100 for processing three-dimensional shape data generated based on images captured by a plurality of cameras installed in a facility, such as a sports stadium and a concert hall, will be described with reference to the configuration of the virtual viewpoint image generation system illustrated in Fig. 1. The virtual viewpoint image generation system includes cameras 101a to 101t, an input unit 102, a foreground model generation unit 103, a background model generation unit 104, a model acquisition unit 105, a model division unit 106, a management unit 107, a storage unit 108, a transmission and reception unit 109, a selection unit 110, and terminals 111a to 111d. Unless otherwise specified, the cameras 101a to 101t will be described as cameras 101. When a camera is simply referred to as a camera, it refers to a real camera or physical camera. Unless otherwise specified, the terminals 111a to 111d will be described as terminals 111. Hereinafter, three-dimensional shape data may be referred to as a model. A model may refer to three-dimensional shape data representing the three-dimensional shape of the foreground or background, or data further including color information for the foreground or background in addition to the three-dimensional shape data.

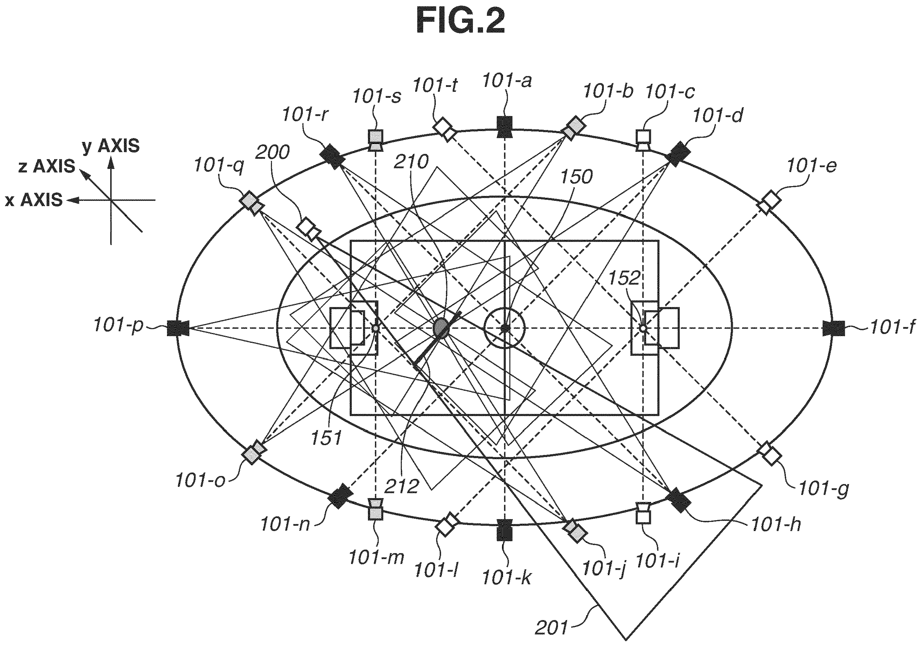

The cameras 101 are disposed to surround a subject (object) and capture images in a synchronized way. Synchronization refers to a state where image capture timings of the cameras 101 are controlled to almost the same timing. Fig. 2 illustrates an example of arrangement of cameras. However, the number and arrangement of cameras are not limited thereto. The cameras 101a to 101t are oriented toward either one of points of regard 150 to 152 at three different positions. To simplify the description, a case of capturing one subject (subject 210) will be described. However, the control can be implemented by performing the same processing even with a plurality of subjects. The cameras 101a to 101t are connected via a wire-lined network, and connected to the input unit 102. The cameras 101 perform image capturing at the same time for each frame, and send out captured image data supplied with, for example, a time code and a frame number. Each individual camera is assigned a camera identifier (ID). The optical axes of the plurality of cameras oriented toward the same point of regard may intersect with each other at this point of regard. The optical axes of the cameras oriented toward the same point of regard do not need to pass through the point of regard. The number of points of regard may be one, two, or three or more. These cameras may be oriented toward different points of regard.

The input unit 102 inputs image data captured and acquired by the cameras 101, and outputs the image data to the foreground model generation unit 103 and the background model generation unit 104. The image data may be captured image data or image data of a region extracted from a captured image. In the latter case, for example, the input unit 102 may output foreground image data for a foreground object region extracted from a captured image, to the foreground model generation unit 103. The input unit 102 may output background image data of a background object region extracted from a captured image, to the background model generation unit 104. In this case, processing for extracting a subject portion, processing for generating a silhouette image, and processing for generating a foreground image by the foreground model generation unit 103 (described below) can be omitted. In other words, these pieces of processing may be performed by an imaging apparatus having cameras.

The foreground model generation unit 103 generates one or more types of three-dimensional shape data of the subject based on input image data. In the present exemplary embodiment, the foreground model generation unit 103 generates a point group model of the subject, a foreground image, and a mesh model. However, the present disclosure is not limited thereto. The foreground model generation unit 103 may generate, for example, a range image from the cameras and a colored point group including points of a point group supplied with color information.

The foreground model generation unit 103 extracts a subject image from image data captured in synchronized image capturing. The method for extracting the subject image is not limited. The foreground model generation unit 103 may capture an image reflecting no subject as a reference image, and extract a subject by using the difference from an input image. The method for estimating the shape is not particularly limited either. For example, the foreground model generation unit 103 may generate three-dimensional shape data by using visual cone intersection method (shape from silhouette method). More specifically, the foreground model generation unit 103 generates a silhouette image in which pixel values of pixel positions in subject portions are 1, and pixel values of pixel positions in other portions are 0. The foreground model generation unit 103 generates point group model data as three-dimensional shape data of the subject based on the generated silhouette image by using visual cone intersection method. The foreground model generation unit 103 parallelly obtains a circumscription rectangle of the subject from the silhouette image, clips a subject image from the input image by using the circumscription rectangle, and extracts this image as a foreground image. The foreground model generation unit 103 also obtains a parallax image of a plurality of cameras, and makes a range image to generate a mesh model. Likewise, the method for generating a mesh model is not particularly limited. However, although the present exemplary embodiment generates several types of three-dimensional shape data, the present disclosure is also applicable to a form for generating one type of three-dimensional shape data.

The background model generation unit 104 generates a background model. Examples of background include a stadium, and a stage of a concert and a theater. The method for generating a background model is not limited. For example, the background model generation unit 104 may generate three-dimensional shape data of, for example, a stadium having a field as the background. Three-dimensional shape data of a stadium may be generated by using a design drawing of the stadium. When using computer aided design (CAD) data as a design drawing, the three-dimensional shape data of the stadium can be the CAD data. The three-dimensional shape data may be generated by laser-scanning the stadium. In this case, the entire stadium is generated as one piece of three-dimensional shape data. A background image, such as an image of the audiences, may be acquired in each image capturing.

The model acquisition unit 105 acquires three-dimensional shape data related to the subject and three-dimensional shape data related to the background generated by the foreground model generation unit 103 and the background model generation unit 104, respectively.

The model division unit 106 divides the input three-dimensional shape data into a plurality of pieces of three-dimensional shape data. The method for dividing data will be described below.

The management unit 107 acquires the three-dimensional shape data acquired by the foreground model generation unit 103 and the three-dimensional shape data divided and generated by the model division unit 106, and stores the data in the storage unit 108. When storing the data, the management unit 107 manages data to enable reading and writing data in association with, for example, the time code and frame number by generating a data access table for reading each data piece. The management unit 107 also outputs data based on an instruction of the selection unit 110 (described below).

The storage unit 108 stores input data. Examples of the storage unit 108 include a semiconductor memory and a magnetic recording apparatus. The storage format will be described below. The storage unit 108 reads and writes data based on an instruction from the management unit 107, and outputs stored data to the transmission and reception unit 109 according to a read instruction.

The transmission and reception unit 109 communicates with the terminals 111 (described below) to receive requests from the terminals 111, and transmit and receive data to/from the terminals.

The selection unit 110 is a selection unit that selects the three-dimensional shape data to be transmitted to the terminals. The operation of the selection unit 110 will be described below. The selection unit 110 selects a part of the three-dimensional shape data to be output, and outputs the relevant information to the management unit 107.

When the user sets a virtual viewpoint, the terminal 111 generates virtual viewpoint information based on the three-dimensional shape data acquired from the three-dimensional information processing apparatus 100, and displays a virtual viewpoint image based on the virtual viewpoint information. The number of terminals 111 can be one.

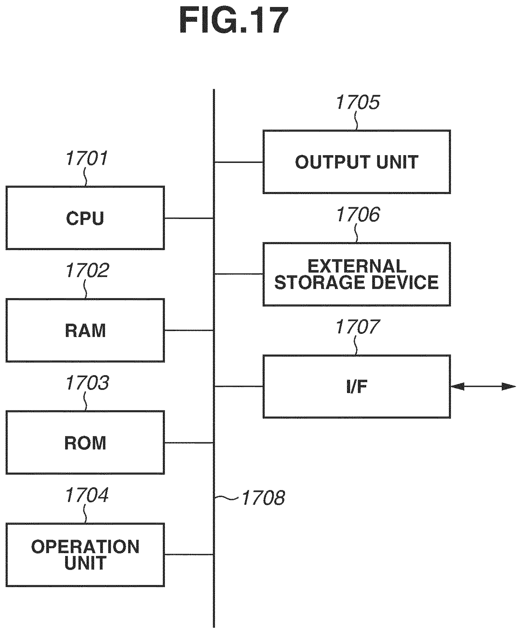

Fig. 17 is a block diagram illustrating an example hardware configuration of a computer applicable to the three-dimensional information processing apparatus 100 according to the present exemplary embodiment. A central processing unit (CPU) 1701 totally controls the computer by using computer programs and data stored in a random access memory (RAM) 1702 and a read only memory (ROM) 1703, and executes processing (described below) to be performed by the three-dimensional information processing apparatus 100 according to the present exemplary embodiment. This means that the CPU 1701 functions as each processing unit in the three-dimensional information processing apparatus 100 illustrated in Fig. 1.

The RAM 1702 includes an area for temporarily storing a computer program and data loaded from an external storage device 1706, and data acquired from the outside via an interface (I/F) 1707. The RAM 1702 further includes a work area used by the CPU 1701 to execute various processing. More specifically, for example, the RAM 1702 can be assigned as a frame memory or suitably provide other various areas.

The ROM 1703 stores setting data or the boot program of the computer. The operation unit 1704 includes a keyboard and a mouse. The user of the computer operates the operation unit 1704 to input various instructions to the CPU 1701. The output unit 1705 displays results of processing by the CPU 1701. The output unit 1705 includes, for example, a liquid crystal display.

The external storage device 1706 is a mass-storage information storage device represented by a hard disk drive apparatus. The external storage device 1706 stores an operating system (OS), and computer programs for causing the CPU 1701 to implement the functions of different units illustrated in Fig. 1. Further, the external storage device 1706 may store different pieces of image data as processing targets.

The computer programs and data stored in the external storage device 1706 are suitably loaded into the RAM 1702 under the control of the CPU 1701 and then become a target to be processed by the CPU 1701. The I/F 1707 can be connected with a network, such as a local area network (LAN) and the Internet, or other apparatuses, such as a projector apparatus and a display apparatus. The computer can acquire and transmit various information via the I/F 1707. A bus 1708 connects the above-described different units.

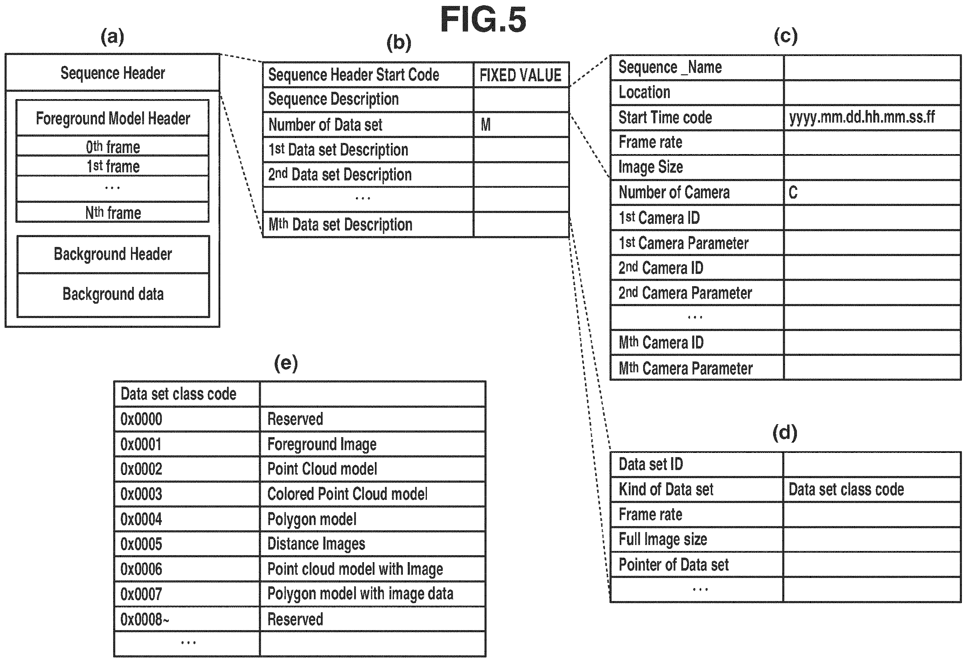

Fig. 5(a) illustrates an example format of the three-dimensional shape data stored in the storage unit 108. The three-dimensional shape data is stored as sequence data indicating a series of image capturing. For example, a sequence corresponds to an event or cut. The management unit 107 manages data for each sequence.

As illustrated in Fig. 5(b), the sequence data includes a sequence header that stores a sequence header start code indicating the start of a sequence. The data stores information about the entire sequence. Examples of information about the entire sequence include the sequence name, location of image capturing, time code indicating the date and time when image capturing is started, frame rate, and image size. As illustrated in Fig. 5(c), the information about the entire sequence also includes information about camera IDs and parameters. The sequence data stores various three-dimensional shape data for each data set. The sequence header stores the number of data sets M. The following area stores information for each data set. According to the present exemplary embodiment, the information includes two different data sets: the data set of the foreground model data and the data set of the background model data.

As illustrated in Fig. 5(d), the information for each data set is initially supplied with an ID for the data set. The IDs are unique IDs in the storage unit 108 or all data sets. The following area stores the kind of the data set. According to the present exemplary embodiment, examples of the data set include point group model data, foreground image, colored point group data, range image data, and mesh model data. Each piece of data is represented as a data set class code. The data set class code is represented as a 2-byte code illustrated in Fig. 5(e). However, the kind and code are not limited thereto. Other data representing three-dimensional shape data is also applicable.

Referring back to Fig. 5(d), the pointer to the relevant data set is subsequently stored. However, this information is not limited to a pointer as long as the information enables accessing each data set. For example, the information may be a file name in a file system built in the storage unit.

The present exemplary embodiment will be described below centering on the point group model data and foreground image as the kind of data set of the foreground model.

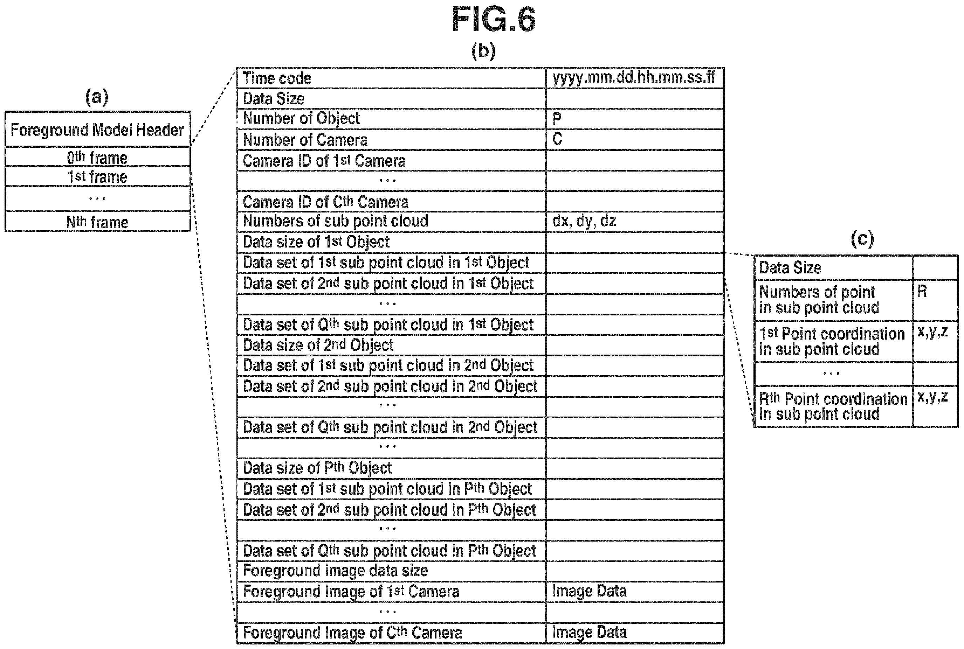

Fig. 6(a) illustrates an example configuration of a foreground model data set. Although the foreground model data set is stored for each frame for the sake of description, the present disclosure is not limited thereto. The foreground model data header is stored at the top of the data set. The header stores information indicating that the present data set is the foreground model data set and stores the number of frames. As illustrated in Fig. 5(b), the following areas store a time code representing the time of the starting frame of the foreground model data, and the data size of the relevant frame in this order. The data size is used to reference the data of the next frame and may be collectively stored in the header. The following area stores the number of subjects P for generating a virtual viewpoint image at the time indicated by the time code. The following area stores the number of cameras C used for image capturing at that timing. The number of cameras C may be the number of cameras that reflect objects instead of the number of cameras used for image capturing. The following area stores the camera ID of the used camera.

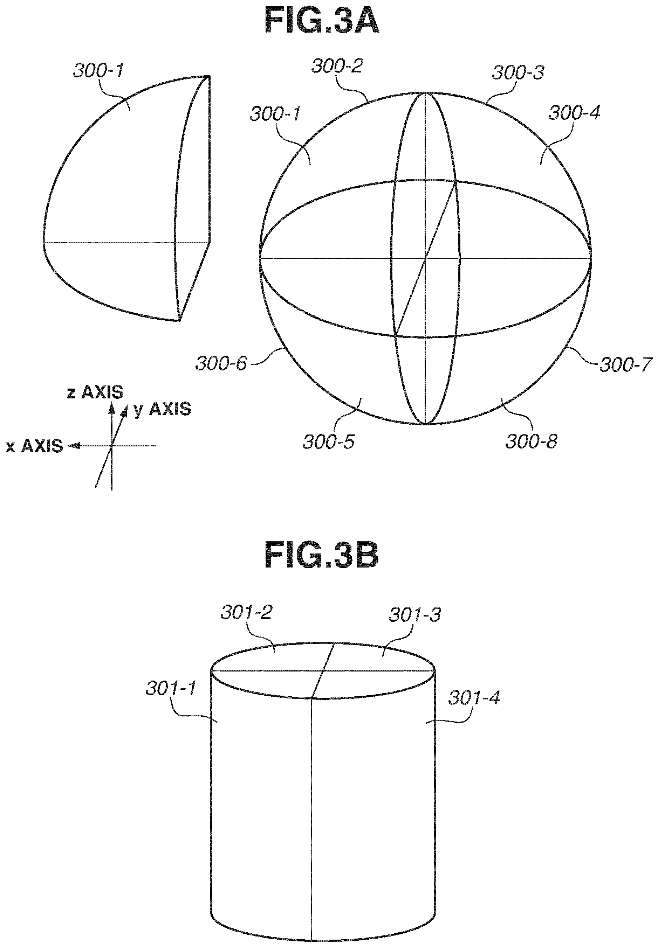

The following area describes the number of divisions of the foreground model data. Division is performed by the model division unit 106. The present exemplary embodiment will be described below centering on a method for equally dividing each of set x, y, and z axes. According to the present exemplary embodiment, the longitudinal direction of the stadium is defined as the x axis, the lateral direction thereof is defined as the y axis, and the height thereof is defined as the z axis. Although these axes are used as reference coordinate axes, the present disclosure is not limited thereto. The number of divisions in the x axis direction is defined as dx, the number of divisions in the y axis direction is defined as dy, and the number of divisions in the z axis direction is defined as dz. Fig. 3A illustrates an example of division. Fig. 3A illustrates a state where dx = 2, dy = 2, and dz = 2, which means that the sphere is divided into eight divisions 300-1 to 300-8. The foreground model is divided into eight divisions assuming that the division center is the center (center of gravity) of the model. One of the divisions on the left-hand side of Fig. 3A indicates the division model 300-1. Fig. 3B illustrates a case where dx = 2, dy = 2, and dz = 1, which means that the foreground model data is divided into four divisions based on the division method in Fig. 3B. However, the division method is not limited thereto. For example, the lateral direction of the stadium may be set as the x axis, the longitudinal direction thereof may be defined as the y axis, and the height thereof may be defined as the z axis. Alternatively, any desired direction may be defined as the x axis, and the y and z axes can be defined to be perpendicular to the x axis. Although division is performed by defining x, y, and z axes perpendicularly intersecting with each other, the division axes are not limited thereto. Division methods other than the coordinate system are also applicable. For example, a person or animal as a subject may be divided into body parts, such as the face, body, arms, and legs.

Referring back to Fig. 6(b), the following area stores the foreground model data for each division. The area stores the data size of the data of the foreground model of a first subject. More specifically, the area stores the point group model data included in the division 300-1 of the point group data of the first subject. The area of divided point group data stores the data size of the included point group and the number of points R configuring the point group model, as illustrated in Fig. 6(c). The following areas sequentially store pieces of point group data of division data. The starting area stores the number of coordinate points configuring the point group of the first subject. The following area stores the coordinates for the relevant number of points. According to the present exemplary embodiment, the coordinate system is stored as 3 axis data, the present disclosure is not limited thereto. The polar coordinate or other coordinate systems are also applicable. Dividing the foreground model in parallel with the x, y, and z axes in this way also provides an effect of implementing the division by simply comparing the coordinate positions.

As illustrated in Fig. 6(b), the following areas store the point group data for each division portion of the first subject, and division data included in the point group data of the second and subsequent subjects in this order. The point group data of up to the P-th subject is stored.

As illustrated in Fig. 6(b), the following area stores the foreground image data for each camera ID. The areas of the foreground image data store the data size, image size, bit depth of pixel values, and pixel values for each piece of the foreground image data. The image data may be encoded with, for example, Joint Photographic Experts Group (JPEG). The following areas store the foreground image data from different cameras for each subject. If no subject is reflected in the relevant camera, NULL data may be stored, or the number of cameras that reflect subjects and the relevant camera IDs may be stored for each subject.

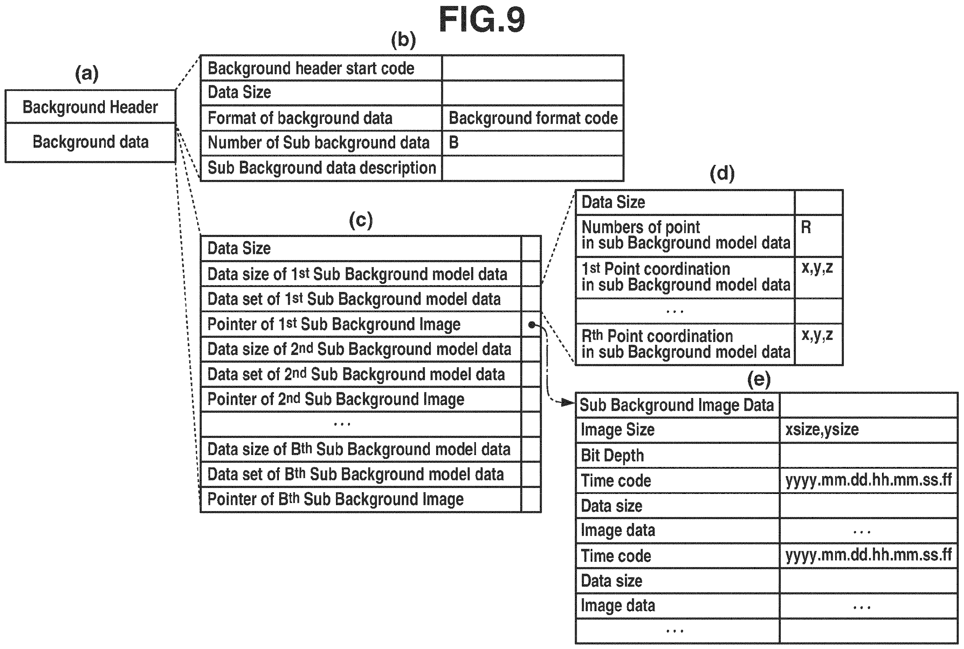

Fig. 9(a) illustrates an example configuration of the background model data set. The background model data header is stored at the top of the data set. As illustrated in Fig. 9(b), the header stores information indicating that the present data set is the background model data set and stores the data size of the data set. The following area describes the format of the background model data. In this case, descriptions will be made on the premise that this format is the same as the data set class code, a code indicating a format specific to the background model data, e.g., CAD format, may be extended. According to the present exemplary embodiment, the data set class code in the format of the background model data is 0x0006. The following area describes the number of divisions of the background model data. The present exemplary embodiment will be described below centering on an example where the background model data is planarly divided into B divisions. Since the main viewpoint of the virtual viewpoint image in the stadium is oriented toward the field, the division of the background can be easily specified centering on the division of the x and y axes. However, the present disclosure is not limited thereto. For example, like the division of the foreground model data, the method for dividing set x, y, and z axes is also applicable. For the background, the structure of the stadium remains unchanged during the imaging period, and thus one piece of background model data will be stored in the sequence. If the background model data changes during the imaging period, the background model data may be generated for each frame like an image, or stored in units of the imaging period during which the data remains unchanged. The background model data may be divided based on not only the coordinate system but also the contents of each background. For example, the field surface may be divided by a different division method. The number of divisions is not also limited thereto. The foreground and the background may be divided by different division methods and different numbers of divisions. For example, increasing the number of divisions decreases the data amount, increasing an effect of improving the processing speed. Further, finely dividing a portion having a large data amount optimizes the amount of transmission data.

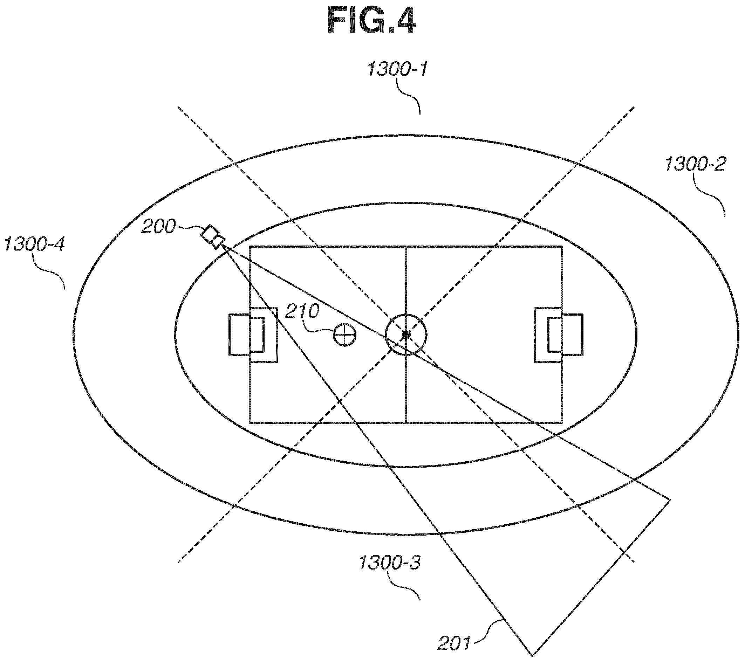

As illustrated in Fig. 9(c), the following area describes details of the divided background model data. For example, each division model indicates the range of the data included in each division model. The description method is not limited. For example, as a structure-dependent division method, division may be performed for each seat class (reserved and unreserved seats) or for each area (back screen direction, main stand, and back stand). Any desired description method is applicable as long as the method suitably describes a range of the divided background model data. The present exemplary embodiment will be described below centering on an example where the background model data is divided into four divisions as illustrated in Fig. 4. Each boundary line forms angles of 45 degrees relative to the x and y axes centering on the center of the field. The stadium is divided into four divisions: a division 1300-1 on the back stand side, a division 1300-2 to the right of the back stand, a division 1300-3 on the main stand side, and a division 1300-4 to the left of the back stand. More specifically, the descriptions include the coordinates of the division center and the positions of the boundary lines of division. With this division method, for a game in which players move mainly in the longitudinal direction, the cameras following the movement of players frequently move on the x axis, and perform image capturing mainly in the directions of the right- and left-hand stands where large monitor screens are installed. The cameras on the main and the back stands mainly follow players moving side to side, and frequently reflect the stand on the opposite side as the background. This division method enables reducing the number of times of updating the background model data.

The following area stores the background model data as illustrated in Fig. 9(d). The starting area stores the data size of the background model data. The following area stores data of each division. The starting area stores the data size of the background model data of the first division, i.e., the division 1300-1. The area further stores the point group data as the background model data of the division 1300-1. The starting area of the point group data indicates the size of the relevant point group data, and the following areas store the number of points of the relevant point group data, and the coordinates of each point. Lastly, referring back to Fig. 9(c), the area stores the pointer of the background image data of the division 1300-1. As the pointing destination of the pointer, the background image data to be pasted on the model of division 1300-1 is stored. More specifically, as illustrated in Fig. 9(e), the area stores the time code, data size, and image data for each frame in addition to descriptions, such as the image size and bit depth of the background image. The following area stores the background image data for each frame. Likewise, the following areas store data for the divisions 1300-2, 1300-3, and 1300-4 in this order.

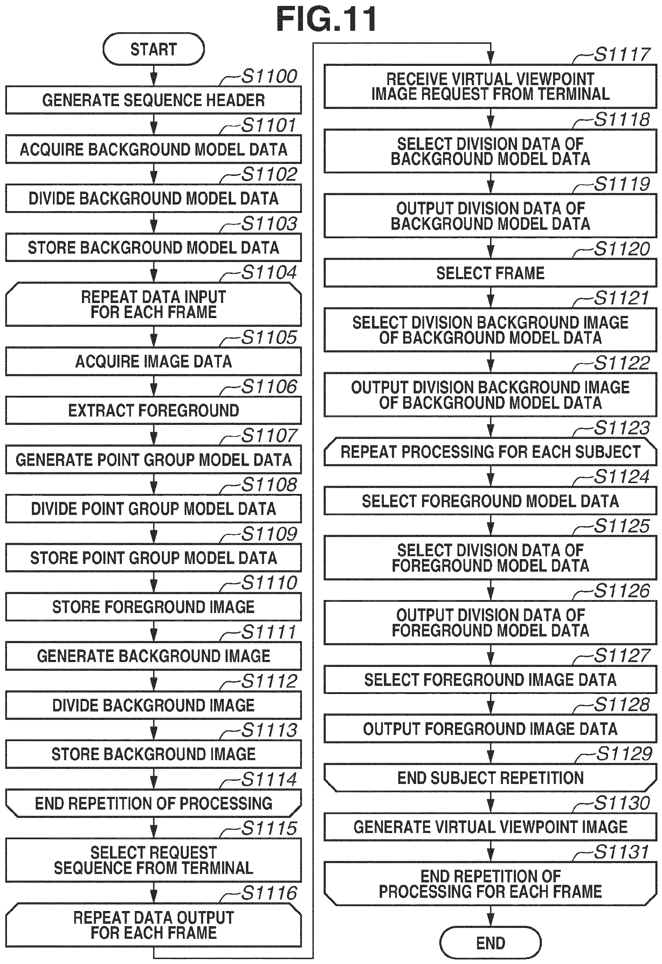

An information processing method for the virtual viewpoint image generation system having the above-described configuration will be described below with reference to the flowchart in Fig. 11. The processing illustrated in Fig. 11 is started when the input unit 102 receives image data.

In step S 1100, the management unit 107 generates the sequence header of the sequence data. The management unit 107 then determines whether to generate a data set to be stored.

In step S1101, the model acquisition unit 105 acquires the background model data. In step S1102, the model division unit 106 divides the background model data based on a predetermined division method. In step S1103, the management unit 107 stores the divided background model data according to a predetermined format in the storage unit 108.

In step S1104, the management unit 107 repeats inputting data for each frame from the start of image capturing. In step S1105, the management unit 107 acquires frame data of images from the cameras 101a to 101t. In step S1106, the foreground model generation unit 103 generates a foreground image and a silhouette image. In step S1107, the foreground model generation unit 103 generates point group model data of a subject by using the silhouette image.

In step S1108, the model division unit 106 divides the generated point group model data of the subject according to a predetermined method. According to the present exemplary embodiment, the point group model is divided into eight divisions as illustrated in Fig. 3A, and thus the model division unit 106 determines which division each point group belongs to based on the coordinates thereof, and divides the point group model data. If a point exists on a boundary line, the point may belong to either one division or belong to both divisions. In step S1109, the management unit 107 stores the divided foreground model data according to a predetermined format in the storage unit 108.

In step S1110, the management unit 107 stores the foreground image generated in step S1106 in the storage unit 108 according to a predetermined format.

In step S1111, the model division unit 106 integrates regions other than the foreground image based on an input image and the foreground image generated by the foreground model generation unit 103 to generate a background image. The method for generating a background image is not particularly limited. The background image generation is performed by using an existing technique for connecting a plurality of images and interpolating the background image with subject images from other cameras, surrounding pixels, and images of other frames. In step S1112, the model division unit 106 divides the generated background image according to a predetermined method. According to the present exemplary embodiment, the foreground model is divided into four divisions as illustrated in Fig. 4, and thus the model division unit 106 determines which division each pixel belongs to and generates the divided background image data. In step S1113, the management unit 107 stores the divided background image data according to a predetermined format in the storage unit 108. In step S1114, the management unit 107 repeats steps S1104 to S1113 until input for each frame is completed.

In step S1115, the transmission and reception unit 109 receives from a terminal 111 information required to generate a virtual viewpoint image on the terminal 111. This information relates at least to the sequence to be used. The user may directly specify a sequence or perform search based on the imaging location, date and time, and event details. The selection unit 110 selects the relevant sequence data based on the input information.

In step S1116, the selection unit 110 repeats data input from the start of the virtual viewpoint image generation for each frame. In step S1117, the transmission and reception unit 109 receives the virtual viewpoint information from the terminal 111 and inputs the information to the selection unit 110. When the virtual viewpoint is virtually compared to a camera, the virtual viewpoint information refers to information including the position, orientation, and angle of view of a virtual camera. More specifically, the virtual viewpoint information refers to information for identifying the position of the virtual viewpoint and the line-of-sight from the virtual viewpoint.

In step S1118, the selection unit 110 selects a division model of the background model data included in the virtual viewpoint image based on the acquired virtual viewpoint information. For example, for a virtual camera 200 in Fig. 2, a region 201 fits into the field of view of the virtual camera 200. Fig. 4 illustrates the statuses of the virtual camera 200 and the region 201. The selection unit 110 determines that the region 201 includes the divisions 1300-2 and 1300-3 for the background image data, and selects these pieces of the divided background model data. More specifically, referring to Fig. 9, the background data included in the division 1300-2 is second division data. Likewise, the background model data included in the division 1300-3 is third division data. The second division data includes the size of the division data of the relevant background model data, "Data size of 2^{nd} Sub Background model data". The second division data includes the data set "Data set of 2^{nd} Sub Background model data". The third division data includes the size of the division data of the relevant background model data, "Data size of 3^{rd} Sub Background model data". The second division data also includes the data set "Data set of 3^{rd} Sub Background model data". The division data corresponds to a sub region of the background displayed in the virtual viewpoint image, and is partial data of the background model data.

In step S1 119, the information selected by the selection unit 110 is input to the management unit 107. Then, the management unit 107 outputs the division model data (second and third division model data) of the background model data selected from the storage unit 108, to the transmission and reception unit 109. The transmission and reception unit 109 transmits the division model data of the selected background model data to the terminal 111. In this case, the deselected first and fourth division model data out of the background model data are not output to the terminal 111. Thus, the amount of data to be output to the terminal 111 can be reduced. The first and the fourth division model data do not contribute to the generation of a virtual viewpoint image. Thus, even if the first and the fourth division model data are not output, the image quality of the virtual viewpoint image generated by the terminal 111 is not affected.

In step S1120, the selection unit 110 selects the frame of the specified time code from the time code for generating a virtual viewpoint image input via the transmission and reception unit 109. In step S1121, the selection unit 110 selects the background image data included in the virtual viewpoint image from the virtual viewpoint information. Like the selection of the division data of the background model data, the selection unit 110 determines that the region 201 includes the background image data of the divisions 1300-2 and 1300-3 for the background image data, and selects these pieces of the divided background image data. More specifically, referring to Fig. 9, the background image data included in the division 1300-2 is the second division data. The second division data is image data of the time code obtained by reading information about image specifications from the data indicated by Pointer of 2^{nd} Sub Background Image, and tracing up to the frame of the relevant time code based on the data size. Likewise, the background image data included in the division 1300-3 is the third division data. The third division data is image data of the time code obtained by reading information about image specifications from the data indicated by Pointer of 3^{rd} Sub Background Image, and tracing up to the frame of the relevant time code based on the data size.

In step S1122, the information selected by the selection unit 110 is input to the management unit 107. Then, the management unit 107 outputs the division data (second and third division data) of the background image data selected from the storage unit 108, to the transmission and reception unit 109. The transmission and reception unit 109 transmits the division data of the selected background image data to the terminal 111. In this case, the deselected first and fourth division data out of the background image data are not output to the terminal 111. Thus, the amount of data to be output to the terminal 111 can be reduced. The first and the fourth division data do not contribute to the generation of a virtual viewpoint image. Thus, even if the first and the fourth division data are not output, the image quality of the virtual viewpoint image generated by the terminal 111 is not affected.

In step S1123, the transmission and reception unit 109 repeats the following processing for all of subjects included in the visual field of the virtual camera 200 in the frame at the time of the relevant time code. In step S1124, the selection unit 110 selects the foreground model data included in the virtual viewpoint image from the virtual viewpoint information. For example, the selection unit 110 selects the foreground model data related to the subject 210 in Fig. 2. In step S1125, the subject 210 is divided by thin lines when viewed from above, as illustrated in Fig. 4. Thus, the selection unit 110 determines that the divisions 300-1, 300-2, 300-3, 300-5, 300-6, and 300-7 are viewed from the virtual camera 200. Thus, the selection unit 110 selects data belonging to these division models.

In step S1126, the selection unit 110 first selects the frame to be processed, based on the input time code. The selection unit 110 compares the time code at the top of the data for each frame with the input time code and skips data for each data size to select the frame data of the relevant time code. When a time code and the pointer of frame data of the relevant time code are stored in a table, the selection unit 110 may determine the frame data through a search operation. In the data of the frame of the relevant time code, the selection unit 110 reads the data size, the number of subjects, the number of cameras, and the camera IDs, and selects required division data. Subsequently, the selection unit 110 selects the foreground model data from the position of the subject 210. For example, assume that the subject 210 is the first subject. For the first subject, the selection unit 110 first selects the foreground model data of the division 300-1. Referring to Fig. 6(b), the foreground data included in the division 300-1 is the first division data. This division data corresponds to the sub region of the subject displayed in the virtual viewpoint image, and is partial data of the foreground object. Then, upon reception of information from the selection unit 110, the management unit 107 reads the first division data from the storage unit 108 and outputs the data. The first division data is data set "Data set of 1^{st} sub point cloud in 1^{st} Object". The selection unit 110 also selects the foreground model data of the division 300-2. Referring to Fig. 6(b), the foreground data included in the division 300-2 is the second division data. Then, upon reception of information from the selection unit 110, the management unit 107 reads the second division data from the storage unit 108 and outputs the data. Subsequently, the second division data is division data set "Data set of 2^{nd} sub point cloud in 1^{st} Object" of the relevant background model data. Likewise, the foreground model data corresponding to the divisions 300-3, 300-5, 300-6, and 300-7 are sequentially output. The foreground model data corresponding to the divisions 300-4 and 300-8 are not output. Thus, the amount of data to be output to the terminal 111 can be reduced. The foreground model data corresponding to the divisions 300-4 and 300-8 does not contribute to the generation of a virtual viewpoint image. Thus, even if such data is not output, the image quality of the virtual viewpoint image generated by the terminal 111 is not affected.

In step S1127, the selection unit 110 selects the foreground image for determining the color of the object viewed from the virtual camera 200. Referring to Fig. 2, the foreground image of the camera close to the virtual camera 200 is selected. For example, it can be seen that the cameras 101-b, 101-o, 101-p, 101-q, and 101-r are capturing the viewable side of the subject 210. For example, selection targets include all of the cameras of which the angle of view includes the subject 210, more on the side of the virtual camera 200 than a plane 212 that can be viewed from the virtual camera 200 and intersects with the subject 210. The foreground images captured by these cameras are selected based on the camera IDs. For the following areas from "Foreground Image of 2^{nd} Camera", the foreground image of each camera is selected based on the camera ID.

In step S1128, the selected foreground image data is read from the storage unit 108 and output to the terminal 111 via the transmission and reception unit 109. In step S1129, steps S1123 to 1128 are repeated until the output of the foreground model data and the foreground image data is completed for all of subjects in the visual field.

In step S1130, the terminal 111 generates a virtual viewpoint image based on the acquired data. In step S1131, steps S1116 to S1130 are repeated until the generation of a virtual viewpoint image is completed or the data input for each frame is completed. When the repetition is completed, the three-dimensional information processing and virtual viewpoint image generation processing are ended.

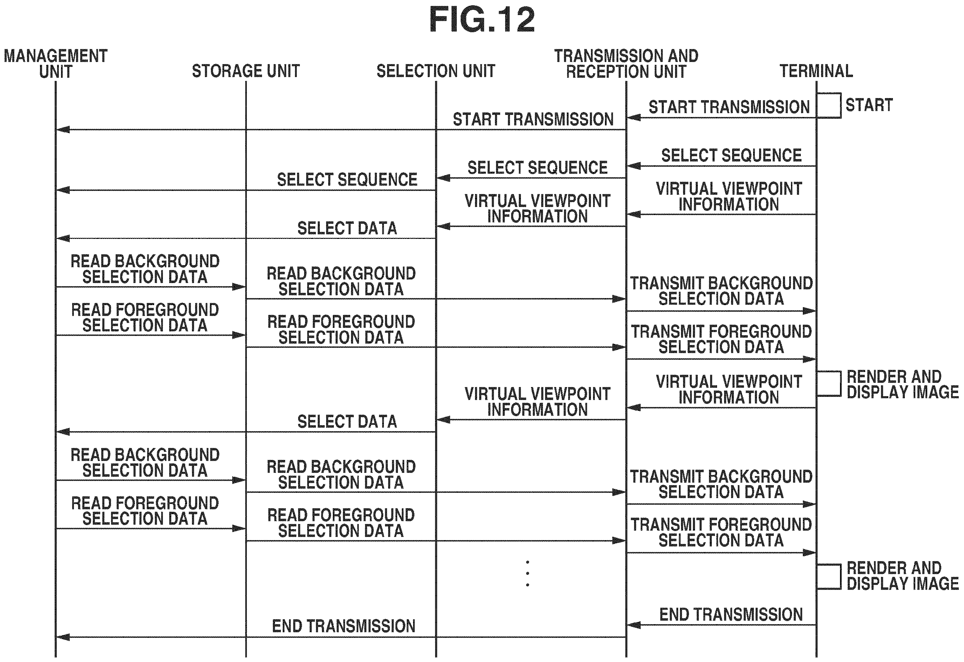

Fig. 12 is a diagram illustrating communication statuses of each unit. Firstly, a terminal 111 is activated. The terminal 111 transmits the start of the virtual viewpoint image generation to the transmission and reception unit 109 of the three-dimensional information processing apparatus. The transmission and reception unit 109 notifies all units of the start of the virtual viewpoint image generation, and each unit prepares for the processing. Subsequently, the terminal 111 transmits sequence data for generating a virtual viewpoint image to the transmission and reception unit 109. This enables the user to search for, specify, and determine sequence data stored in the storage unit 108 via the terminal 111. Information about the sequence data transmitted from the terminal 111 is input to the selection unit 110 via the transmission and reception unit 109. The selection unit 110 instructs the management unit 107 to read the selected sequence.

Subsequently, the terminal 111 transmits the time to start the virtual viewpoint image generation, time code, and virtual viewpoint information to the transmission and reception unit 109. The transmission and reception unit 109 transmits these pieces of information to the selection unit 110. The selection unit 110 selects the frame for generating a virtual viewpoint image from the input time code. The selection unit 110 also selects the divided background model data, divided background image data, divided foreground model data, and divided foreground image data, based on the virtual viewpoint information.

The information about the data selected by the selection unit 110 is then transmitted to the management unit 107. Based on these pieces of information, the data required for the frame for generating a virtual viewpoint image is read from the storage unit 108 and transmitted to the transmission and reception unit 109. The transmission and reception unit 109 transmits these pieces of data to the terminal 111 that issued the relevant request. The terminal 111 performs rendering based on these pieces of data to generate a virtual viewpoint image. Subsequently, the transmission of virtual viewpoint information, the selection of division data, and the generation of a virtual viewpoint image are repeated for the next frame processing. When the terminal 111 transmits an end of transmission to the transmission and reception unit 109, all processing is completed.

Although, in the present exemplary embodiment, processing is illustrated in a flowchart as a sequential flow, the present disclosure is not limited thereto. For example, the selection and output of the foreground and the background model data can be performed in parallel. Alternatively, in the present exemplary embodiment, if the division data of the background model data selected in the subsequent frame remains unchanged, the management unit 107 may transmit no data or information about no change. By continuing to use the division data of the previous frame if the division data of the background model data is not updated, the terminal 111 can generate the background. This reduces the possibility that the same background model data is repeatedly transmitted, thereby reducing the amount of transmission data.

The three-dimensional information processing apparatus 100 may also generate virtual viewpoint information. In this case, the virtual viewpoint information needs to be input to the selection unit 110, and the subsequent processing is the same as the above-described processing. However, the data transmitted to the terminal 111 also includes the virtual viewpoint information. The virtual viewpoint information may be automatically generated by the three-dimensional information processing apparatus 100 or input by a user different from the user operating the terminal 111.

The above-described configurations and operations enable transmitting only the three-dimensional shape data required to generate a virtual viewpoint image based on the virtual viewpoint information. This restricts the amount of transmission data and enables the efficient use of the transmission line. The above-described configurations and operations also reduce the amount of data to be transmitted to each terminal, enabling connection with a larger number of terminals.

Although the foreground model generation unit 103 and the background model generation unit 104 generate three-dimensional shape data based on images captured by a plurality of cameras, the present disclosure is not limited thereto. Three-dimensional shape data may be artificially generated by using computer graphics. Although descriptions have been made on the premise that the three-dimensional shape data stored in the storage unit 108 includes the point group model data and the foreground image data, the present disclosure is not limited thereto.

### (Modifications)

Another example of data stored in the storage unit 108 will be described below.

### <Example of Point Group Model Data Having Color Information>

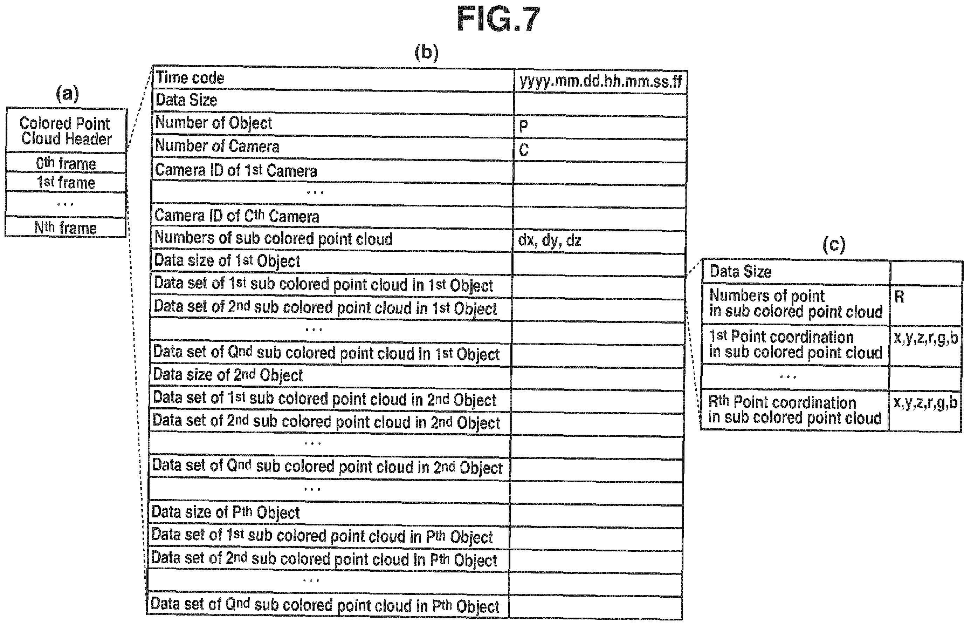

Fig. 7(a) illustrates an example configuration of a data set of colored point group model data in which color information is supplied to each point of the point group. The colored point group model data is divided like the foreground model data illustrated in Fig. 6. More specifically, as illustrated in Fig. 7(b), the colored point group model data is composed of frames like the foreground model data. The areas of the colored point group model data store from the top the time code, the data size of the relevant frame, the number of subjects, the number of cameras used for image capturing, and the camera IDs in this order. The following areas describe the number of divisions of the colored point group model data, the data size of the colored point group model data of each subject, and the data for each piece of the divided colored point group model data, in this order. As illustrated in Fig. 7(c), the areas of the divided colored point group model data store the data size, the number of points of the divided colored point group model data, and the coordinates and color information for each point in this order.

The colored point group model is used instead of the above-described foreground model data. More specifically, in generating a virtual viewpoint image, the colored point group model data is selected and transmitted to the terminal 111. The terminal 111 colors the pixel values at the position of the point of the point group model data with the color information. The use of the three-dimensional shape data enables integrally handling the above-described point group model data and foreground image data, making it easier to select and specify data. Further, the use of the three-dimensional shape data enables generating a virtual viewpoint image through simple processing, resulting in cost reduction on the terminal.

### <Example of Mesh Model Data>

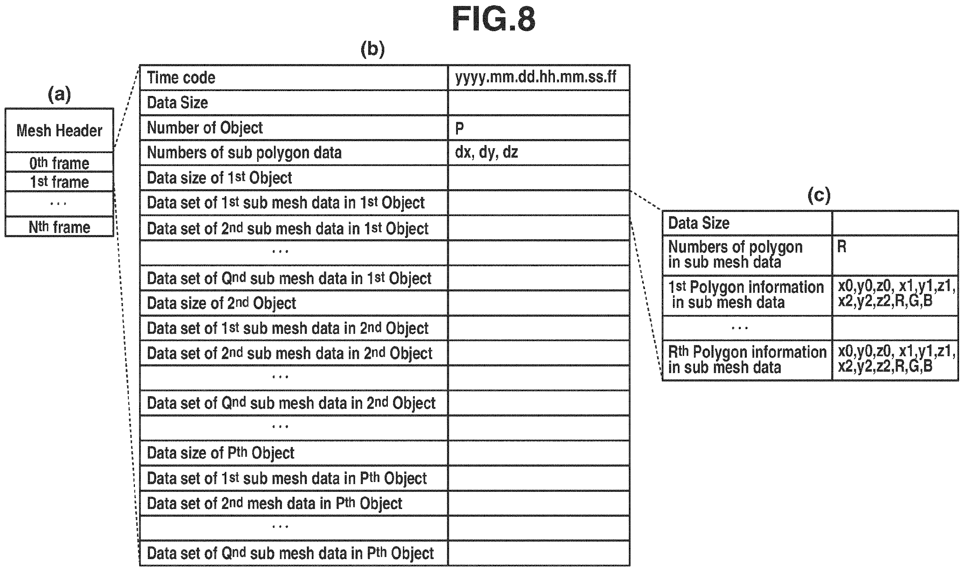

Fig. 8(a) illustrates an example configuration of a data set of mesh model data configuring a mesh. The mesh model is divided like the foreground model data and the colored point group model data. More specifically, as illustrated in Fig. 8(b), the mesh model data is composed of frames like the foreground model data, and stores from the top the time code, the data size of the relevant frame, and the number of subjects in this order. The following areas describe the number of divisions of the mesh model data, the data size of the mesh model data of each subject, and the data for each piece of the divided mesh model data. As illustrated in Fig. 8(c), the areas of the divided mesh model data store the data size, the number of polygons of the divided mesh model data, and data for each polygon, i.e., the coordinates of polygon vertexes and the color information for polygons, in this order.

The coordinate system for describing vertexes is based on 3-axis data, and the color information is stored as values of the three primary colors, red (R), green (G), and blue (B). However, the present disclosure is not limited thereto. The coordinate system can employ the polar or other coordinate system. The color information may be represented by such information as the uniform color space, luminance, and chromaticity. In generating a virtual viewpoint image, the mesh model data is selected instead of the above-described foreground model data and transmitted to the terminal 111. The terminal 111 generates a virtual viewpoint image by coloring the region surrounded by the vertexes of the mesh model data with the color information. The use of the three-dimensional shape data makes it easier to select and specify data like the colored point group model data. Further, the use of the three-dimensional shape data enables reducing the amount data to a further extent than the colored point group model data. This enables cost reduction on the terminal and connection with a larger number of terminals.

The mesh model data may be generated without coloring as data used to subject the foreground image data to texture mapping like the foreground model data. More specifically, the data structure of the mesh model data may be described in a format only with the shape information and without the color information.

### <Another Example of Background Model Data>

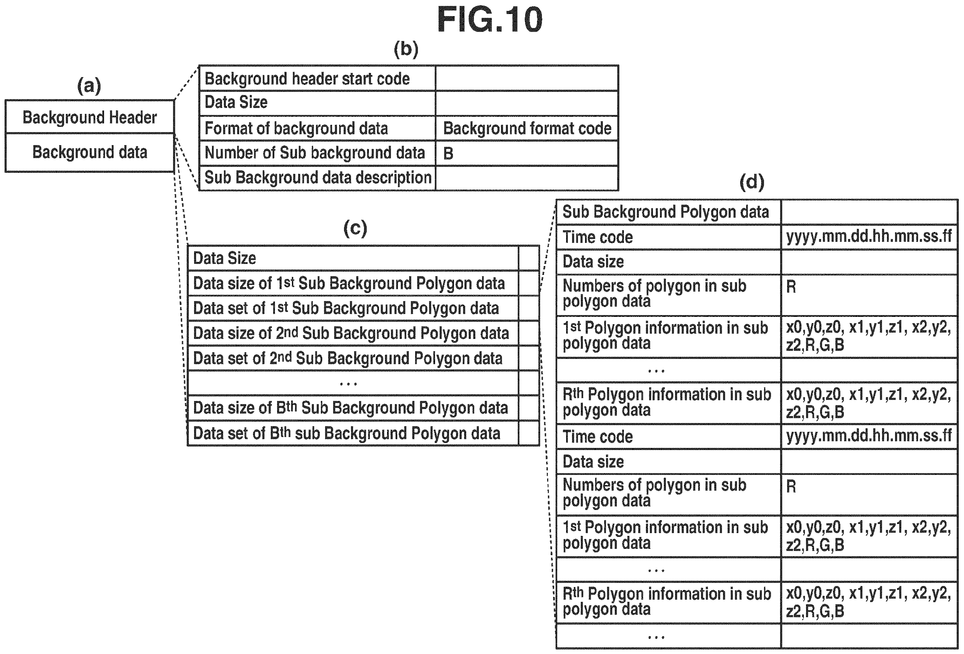

The background model data can also be managed based on the mesh model data. Figs. 10(a) to 10(d) illustrate an example of background model data composed of the mesh model data. As illustrated in Fig. 10(b), the contents of the header indicate the header itself of the background model data. However, according to the present exemplary embodiment, the data set class code of the format of the background model data is 0x0007. When the background model data is a mesh model, as illustrated in Fig. 10(c), the data size of the background image model data and then the first division data size are stored. The following area stores the polygon data of the first division. As illustrated in Fig. 10(d), the starting area of the divided mesh model data stores the time code. The following areas store the number of polygons of the divided mesh model data, and data for each polygon, i.e., the coordinates of polygon vertexes and the color information for polygons, in this order.

In the background generation in generating a virtual viewpoint image, the use of the mesh model data makes it easier to select and specify data. Further, the use of the mesh model data enables reducing the amount data to a further extent than the colored point group model data, enabling cost reduction on the terminal and connection with a larger number of terminals.

If a polygon exists on a boundary line, the polygon may belong to either one division or belong to both divisions. Alternatively, a polygon may be divided on a boundary line and belong to both divisions.

### (Second Exemplary Embodiment)

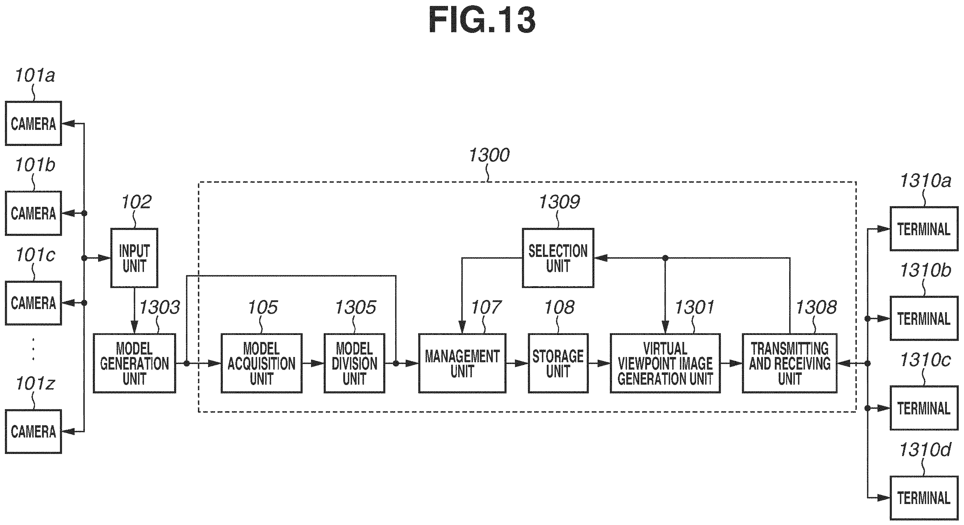

A three-dimensional information processing apparatus 1300 as an apparatus for processing three-dimensional shape data according to a second exemplary embodiment will be described below with reference to the configuration of the virtual viewpoint image generation system illustrated in Fig. 13. Referring to Fig. 13, components having the same unit operation as those in Fig. 1 are assigned the same reference numerals, and redundant descriptions thereof will be omitted. The present exemplary embodiment differs from the first exemplary embodiment in that the three-dimensional information processing apparatus 1300 includes a virtual viewpoint image generation unit 1301. The present exemplary embodiment also differs from the first exemplary embodiment in the division method. A model generation unit 1303 has functions of the foreground model generation unit 103 and the background model generation unit 104 according to an eleventh exemplary embodiment. An example of a hardware configuration of the computer applicable to the three-dimensional information processing apparatus 1300 according to the present exemplary embodiment is the same as that according to the first exemplary embodiment, and thus will be omitted.

Terminals 13 10a to 1310d transmit virtual viewpoint information in which the user-sets virtual viewpoint to the three-dimensional information processing apparatus 1300. The terminals 1310a to 1310d not having a renderer only set a virtual viewpoint and display the virtual viewpoint image. A transmission and reception unit 1308 has the function of the transmission and reception unit 109 according to the first exemplary embodiment. In addition, the unit 1308 receives the virtual viewpoint information from the terminals 1310 and transmits the information to a selection unit 1309 and the virtual viewpoint image generation unit 1301. The transmission and reception unit 1308 also has a function of transmitting the generated virtual viewpoint image to the terminals 13 10a to 13 10d that has transmitted the virtual viewpoint information. The virtual viewpoint image generation unit 1301 has a renderer and generates a virtual viewpoint image based on the input virtual viewpoint information and the three-dimensional shape data read from the storage unit 108. The selection unit 1309 selects a data set necessary for the virtual viewpoint image generation unit 1301 to generate a virtual viewpoint image. Unless otherwise noted, the terminals 1310a to 1310d will be described below as the terminals 1310. The number of terminals 1310 is not limited to this and may be one.

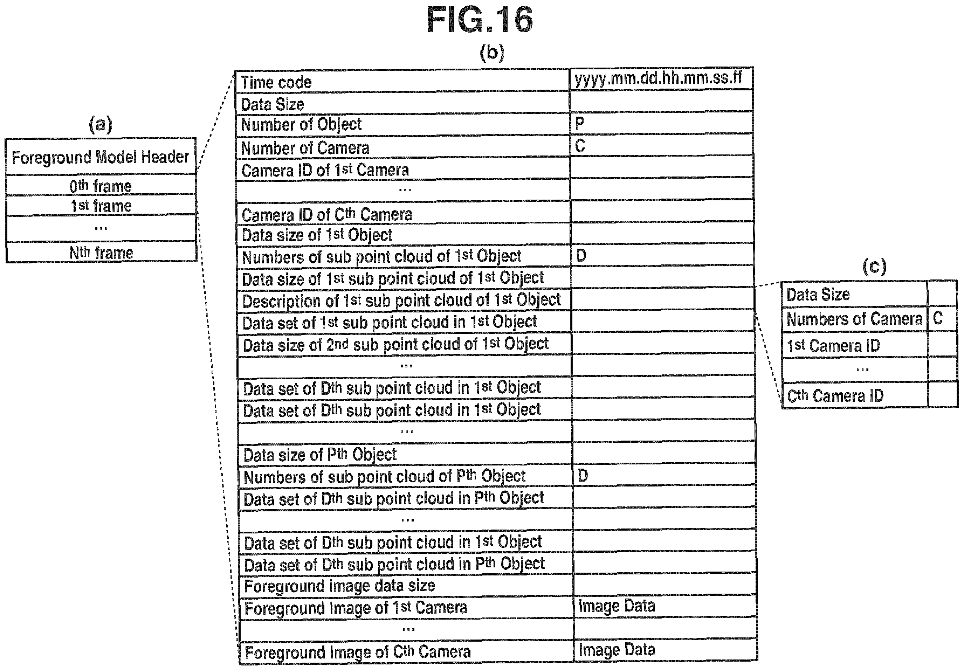

Figs. 16(a) to 16(c) illustrate an example configuration of foreground model data according to the second exemplary embodiment. The foreground model data set is assumed to be stored for each frame for the sake of description, the present disclosure is not limited thereto. For example, the foreground model data may be managed for each object. The foreground model data header is the same as that according to the first exemplary embodiment. The present exemplary embodiment will be described below centering on an example where the three-dimensional shape data is composed of the point group model data and the foreground image data.

As illustrated in Fig. 16(b), the following areas store the time code representing the time of the starting frame of the foreground model data, and the data size of the relevant frame in this order. The following area stores the number of subjects P for generating a virtual viewpoint image at the time indicated by the time code. The following area stores the number of cameras C used for image capturing at that timing. The following area stores the camera ID of the used camera. The following areas store the foreground model data of each subject. The starting area stores the data size for representing the foreground model data of the subject. The following area stores the number of divisions D of the foreground model data of the subject.

The following area stores the divided foreground model data of the subject. The areas store the data size of the divided foreground model data, and descriptions of the divided foreground model data. According to the present exemplary embodiment, as illustrated in Fig. 16(c), stored descriptions include the data size of the divided foreground model, the number of cameras C capturing the relevant subject, and C pieces of camera IDs. The following area stores the divided foreground model data. The configuration of the divided foreground model data is the same as that illustrated in Fig. 6(b). The configuration of the foreground image data is the same as that illustrated in Fig. 6(b).

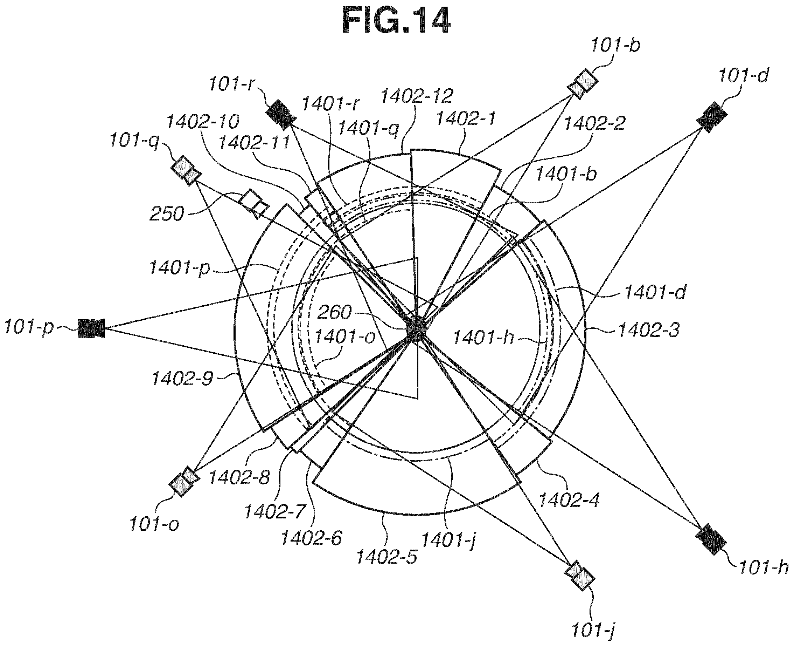

Fig. 14 illustrates an example of division according to the present exemplary embodiment, where dividing into 12 divisions is performed. However, the division method and the number of divisions are not limited thereto. For example, a concentric region 1401-b indicates the imaging range of the camera 101-b on the subject 210, where the subject 210 can be viewed. There can be seen similar relations between the following combinations: a region 1401-d and the camera 101-d, a region 1401-h and the camera 101-h, a region 1401-j and the camera 101-j, a region 1401-o and the camera 101-o, a region 1401-p and the camera 101-p, a region 1401-q and the camera 101-q, and a region 1401-r and the camera 101-r. The boundaries of ranges where these regions are overlapped are referred to as division boundaries.

A division 1402-1 includes the regions 1401-b and 1401-r, and the number of cameras C is 2. The data of the point of the point group model data of the subject 210 is included in "Data set of 1^{st} sub point cloud in 1^{st} Object". "Number of Camera" is 2, and the color of the point group of this division can be determined only with images of the cameras 101-b and 101-r (camera IDs). Likewise, a division 1402-2 includes the region 1401-b, and the number of cameras C is 1. A division 1402-3 includes the regions 1401-d and 1401-h, and the number of cameras C is 2. A division 1402-4 includes the region 1401-d, and the number of cameras C is 1. A division 1402-5 includes the region 1401-j, and the number of cameras C is 1. A division 1402-6 includes the regions 1401-j and 1401-q, and the number of cameras C is 2. A division 1402-7 includes the region 1401-q, and the number of cameras C is 1. A division 1402-8 includes the regions 1401-p and 1401-q, and the number of cameras C is 2. A division 1402-9 includes the regions 1401-o, 1401-p, and 1401-q, and the number of cameras C is 3. A division 1402-10 includes the regions 1401-p and 1401-q, and the number of cameras C is 2. A division 1402-11 includes the regions 1401-b, 1401-p, 1401-q, and 1401-r, and the number of cameras C is 4. A division 1402-12 includes the regions 1401-b, 1401-q, and 1401-r, and the number of cameras C is 3. These regions and divisions are uniquely determined by the position of the subject 210 and the positions of the cameras performing image capturing.

The above-described configuration equalizes the camera ID for the foreground images in each division, providing an effect of facilitating the data management.

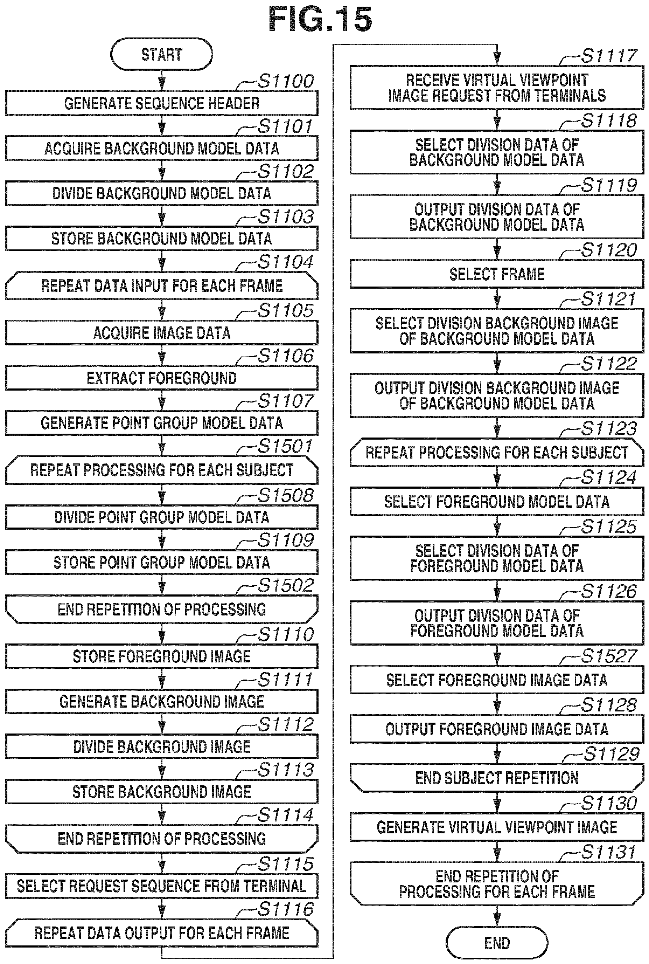

An information processing method of the virtual viewpoint image generation system having the above-described configuration according to the second exemplary embodiment will be described below with reference to the flowchart in Fig. 15. Referring to Fig. 15, steps involving the same processing and operation of each unit as those according to the first exemplary embodiment (Fig. 11) are assigned the same reference numerals, and redundant descriptions thereof will be omitted. The processing illustrated in Fig. 15 is started when the input unit 102 receives image data.

After generating a sequence header in step S 1100, then in steps S1101 to S1103, the management unit 107 performs processing for the background model data. In step S1104, the management unit 107 repeats data input for each frame from the start of image capturing. In step S1107, the point group model data has been generated for each subj ect.

In step S1501, the management unit 107 repeats dividing the foreground model data for each subject. In step S1508, the management unit 107 divides the data into regions to be captured by one or more cameras as illustrated in Fig. 14. In step S1502, when the division of the foreground model data is completed for all of subjects, the management unit 107 ends the repetition of processing.

In steps S1111 to S1113, the management unit 107 generates, divides, and stores the background images like the first exemplary embodiment. In step S1115, the transmission and reception unit 1308 receives from a terminal 1310 information necessary for the terminal 1310 to generate a virtual viewpoint image. The selection unit 1309 selects the relevant sequence data according to the input information. In step S1116, the selection unit 1309 repeats data input for each frame from the start of the virtual viewpoint image generation.

In steps S1117 to S1122, the selection unit 1309 selects and outputs the background model data and the background image data required to generate the background. In step S1123, the management unit 107 repeats the subsequent processing for all of subjects included in the visual field of the virtual camera 200 in the frame at the time of the relevant time code. In step S1124, the selection unit 110 selects the foreground model data included in the virtual viewpoint image from the virtual viewpoint information. For example, the foreground model data for the subject 260 illustrated in Fig. 14 is selected.

In step S1525, the selection unit 1309 selects the divided foreground model data with reference to Fig. 14. As illustrated in Fig. 14, the cameras 101-q and 101-r exist near the virtual camera 250. The selection unit 1309 selects the division data of the divided foreground model data including the camera IDs of these cameras. Since these camera IDs are included in the divisions 1402-1 and 1402-3, these pieces of division data are selected.

In step S1126, the management unit 107 acquires the selected information from the selection unit 1309, and outputs these pieces of division data from the storage unit 108 to the virtual viewpoint image generation unit 1301. In other words, the subject 260 in Fig. 14 is the first subject. Then, the management unit 107 outputs "Data size of 1^{st} sub point cloud of 1^{st} Object" as the division data of the foreground model data of the division 1402-1. The management unit 107 further outputs "Data size of 3^{rd} sub point cloud of 1^{st} Object" as the division data of the foreground model data of the division 1402-3.

In step S1527, the selection unit 1309 selects the foreground image data of the camera IDs included in all of the division data selected in step S1525. In step S1128, the management unit 107 acquires information about the selected data, reads the data selected from the storage unit 108, and outputs the data to the virtual viewpoint image generation unit 1301.

In step S1130, the virtual viewpoint image generation unit 1301 generates a virtual viewpoint image based on the acquired data and the virtual viewpoint information. The unit 1301 then outputs the generated virtual viewpoint image to the transmission and reception unit 1308. The transmission and reception unit 1308 transmits the generated virtual viewpoint image to the terminal 1310 that requests for the generation of the virtual viewpoint image.

The above-described configurations and operations transmit only the three-dimensional shape data required to generate a virtual viewpoint image based on camera information based on the virtual viewpoint information. This restricts the data amount of transmission and enables the efficient use of the transmission line. The above-described configurations and operations can also reduce the amount of information to be transmitted to each terminal, enabling connection with a larger number of terminals. In this case, the transmission path refers to the communication path for transmission between the storage unit 108 and the virtual viewpoint image generation unit 1301. The configuration for transmitting a generated virtual viewpoint image to the terminal 1310 reduces the amount of data to be transmitted from the transmission and reception unit 1308 to the terminal 1310 to a further extent than the configuration for transmitting material data for generating a virtual viewpoint image to the terminal 1310.

The generation of division data may be performed by using visibility information. The visibility information refers to information indicating cameras from which components of the three-dimensional shape data (e.g., points for the point group model data) are viewable. According to the present exemplary embodiment, points of the point group viewable from the cameras close to the position of the virtual camera 250 may be selected by using the visibility information, and only the viewable points may be output. Since only points viewable from the virtual camera 250 are transmitted, the amount of information can be further reduced.

According to the present exemplary embodiment, data is divided after the generation of the entire foreground model data, the present disclosure is not limited thereto. For example, data may be divided while generating the foreground model data through shape estimation. For example, the shape estimation may be performed for each division or performed while calculating a visibility determination result and determining which division a point or polygon belongs to.

According to the above-described exemplary embodiments, data may be transmitted with priority given to the division data to be transmitted. For example, the division 1402-3 including the region 1401-p in front of the virtual camera 200 is transmitted first. This provides an effect of generating a video covering at least a large part of the viewable range if the transmission of other divisions is congested because of an insufficient band or delay.

Further, since the cameras that capture a division can be identified for each division, a list of camera IDs of the cameras that capture a division may be generated for each division. Thus, by detecting cameras near the virtual viewpoint camera and performing collation with the list, time and the number of processes for determining usable divisions can be reduced.

In addition to the division data included in the visual field of the virtual camera, the division data of the adjacent portion can be transmitted. This enables improving the image quality of subjects or the like in the visual field by obtaining information required to determine pixel values of portions out of the field of view, such as boundaries between regions. The image quality can also be controlled by determining whether to transmit such information and lowering the priority of a division out of the visual field. For example, the amount of transmission data or the image quality can be controlled by thinning points of the point group of a low-priority division or thinning cameras transmitting the foreground image. The priority can also be raised for a particular division such as a face.

Divisions are determined not only by the overlapping of imaging ranges of the cameras. Divisions may be selected so that the number of point groups is almost the same, or the sizes of divisions may be identical. Divisions are basically not overlapped but may be partially overlapped. For example, referring to Fig. 14, the region 1402-7 may be included in both the divisions 1402-6 and 1402-8. The foreground image of points in this region will be used for the coloring of points of the boundary between the two regions, providing an effect of improving the image quality of the boundary between divisions.

### (Modifications)

The following division method is also applicable. More specifically, the foreground model may be divided based on the virtual viewpoint information. In this case, the foreground model is not divided until the virtual viewpoint information is identified. More specifically, not the data of the divided model but the foreground model for each subject is defined for the storage unit 108. More specifically, referring to Fig. 16, pieces of data divided into "sub" are unified into one. More specifically, referring to Fig. 16(b), "Data size of 1^{st} sub point cloud of 1^{st} Object" is read as "Data size of point cloud of 1^{st} Object". Then, "Data size" of "point cloud of 1^{st} Object" itself is written to this area. "Description of 1^{st} sub point cloud of 1^{st} Object" is read as "Description of point cloud of 1^{st} Object". "Data set of 1^{st} sub point cloud in 1^{st} Object" is read as "Data set of point cloud in 1^{st} Object". Then, "Data size of 2^{nd} sub point cloud of 1^{st} Object" to "Data set of D^{th} sub point cloud in 1^{st} Object" are omitted. This applies to not only the foreground model but also the background model.

Upon reception of an instruction for generating a virtual viewpoint image from the terminal 1310, the selection unit 1309 identifies the foreground model included in the virtual visual field from the virtual viewpoint identified based on the virtual viewpoint information acquired through the transmission and reception unit 1308. The selection unit 1309 further identifies the portion to be displayed in the virtual viewpoint image out of the identified foreground model. Then, the selection unit 1309 outputs information about the identified portion to the management unit 107. The management unit 107 divides the foreground model stored in the storage unit 108 into the portion to be displayed in the virtual viewpoint image and other portions based on the acquired information. The management unit 107 outputs the partial model corresponding to the portion to be displayed in the virtual viewpoint image out of the divided model to the virtual viewpoint image generation unit 1301. The management unit 107 therefore outputs a part of the foreground model required for the virtual viewpoint image, making it possible to reduce the amount of transmission data. Since the management unit 107 divides the foreground model after acquiring the virtual viewpoint information, a sufficient division model can be effectively generated. This also simplifies the data to be stored in the storage unit 108.

A configuration where the management unit 107 also serves as the model division unit 1305 has been described above. However, the management unit 107 may extract the partial model corresponding to the portion to be displayed in the virtual viewpoint image, and output the partial model to the virtual viewpoint image generation unit 1301. In this case, the model division unit 1305 does not need to be included in the three-dimensional information processing apparatus 1300.

The partial model to be output may be specified by the terminal 1310. For example, the user may specify the partial model to be output via the terminal 1310 operated by the user, or identify the partial model to be output by the terminal 1310 based on the virtual viewpoint information specified by the user. This partial model may be a partial model divided in advance like the first and the second exemplary embodiments, or a partial model divided or identified based on the virtual viewpoint information. A plurality of partial models divided in advance may be displayed on the terminal 1310 to prompt the user to specify a partial model.

All of the plurality of partial models included in the foreground model may be output. For example, all of the plurality of partial models may be output by a user instruction.

For example, when the terminals 13 10a to 1310d input different virtual viewpoint information for the same frame of the same sequence at the same timing, the following configuration is also applicable. In other words, it is also possible to define visual fields of a plurality of virtual cameras corresponding to a plurality of pieces of virtual viewpoint information input from each of the terminals 1310a to 1310d, identify the foreground model included in one of the visual fields, and identify the portion to be displayed in any one virtual viewpoint image out of the foreground model. Then, the portion to be displayed in any one virtual viewpoint image identified may be output to the virtual viewpoint image generation unit 1301. If the portion to be displayed in the virtual viewpoint image is identified and output for each virtual viewpoint image, data is output in a duplicated way resulting in an increase in the amount of transmission data. The above-described configuration enables avoiding the data duplication, making it possible to restrict the increase in the amount of transmission data. The virtual viewpoint image generation unit 1301 may generate a plurality of virtual viewpoint images at the same time or generate virtual viewpoint images one by one. In the latter case, the virtual viewpoint image generation unit 1301 may primarily store the output data in a buffer and use the data at a necessary timing.

Although descriptions have been made centering on a case where the three-dimensional information processing apparatus 1300 includes the virtual viewpoint image generation unit 1301, the present disclosure is not limited thereto. For example, there may be provided an external apparatus including the virtual viewpoint image generation unit 1301 separately from the three-dimensional information processing apparatus 1300. In this case, it is necessary that material data (i.e., a foreground model) required for the virtual viewpoint image is output to the external apparatus, and the virtual viewpoint image generated by the external apparatus is output to the transmission and reception unit 1308.

### (Other Exemplary Embodiments)

The present disclosure can also be achieved when a program for implementing at least one of the functions according to the above-described exemplary embodiments is supplied to an apparatus or apparatus via a network or storage medium, and at least one processor in a computer of the apparatus or apparatus reads and executes the program. Further, the present disclosure can also be achieved by a circuit, such as an application specific integrated circuit (ASIC), for implementing at least one function.

The present disclosure can also be achieved when a storage medium storing computer program codes for implementing the above-described functions is supplied to a system, and the system reads and executes the computer program codes. In this case, the computer program codes themselves read from the storage medium may implement the functions of the above-described exemplary embodiments, and may execute the present disclosure by using the storage medium storing the computer program codes. The present disclosure also includes a case where the OS or the like operating on the computer partially or entirely executes actual processing based on instructions of the program codes, and the above-described functions are implemented by the processing. The present disclosure may also be achieved in the following form. The computer program codes are read from a storage medium and stored in a memory included in a function extension card inserted into the computer or a function extension unit connected thereto. The CPU or the like included in the function extension card or the function extension unit may partially or entirely execute actual processing based on instructions of the computer program codes to implement the above-described functions. When the present disclosure is applied to the above-described storage medium, the storage medium stores the computer program codes corresponding to the above-described processing.

While the present disclosure has specifically been described in detail above based on the above-described exemplary embodiments, the present disclosure is not limited thereto and can be modified and changed in diverse ways within the scope of the appended claims of the present disclosure.

The present disclosure is not limited to the above-described exemplary embodiments but can be modified and changed in diverse ways without departing from the spirit and scope of the present disclosure. Therefore, the following claims are appended to disclose the scope of the present disclosure.

The present application claims priority based on Japanese Patent Application No. 2021-024134, filed on February 18, 2021, which is incorporated herein by reference in its entirety.

## Claims

1. An information processing apparatus comprising:
first acquisition means for acquiring virtual viewpoint information for identifying a position of a virtual viewpoint and a line-of-sight from the virtual viewpoint;
second acquisition means for acquiring three-dimensional shape data of an object;
identification means for identifying a sub region of the object to be displayed in a virtual viewpoint image representing a view from the virtual viewpoint, based on the virtual viewpoint information acquired by the first acquisition means; and
output means for outputting partial data corresponding to the sub region identified by the identification means out of the three-dimensional shape data acquired by the second acquisition means.

2. The information processing apparatus according to claim 1,
wherein the three-dimensional shape data includes a plurality of pieces of partial data, and
wherein the output means outputs partial data including components of the three-dimensional shape data corresponding to the sub region identified by the identification means out of the plurality of pieces of partial data.

3. The information processing apparatus according to claim 2, wherein the plurality of pieces of partial data is generated through divisions according to positions of the three-dimensional shape data.

4. The information processing apparatus according to claim 2 or 3, wherein the plurality of pieces of partial data is generated through divisions based on reference coordinate axes.

5. The information processing apparatus according to any one of claims 2 to 4, wherein the plurality of pieces of partial data is generated through divisions based on a position of an imaging apparatus used to generate three-dimensional shape data.

6. The information processing apparatus according to claim 1, further comprising division means for dividing the three-dimensional shape data acquired by the second acquisition means into a plurality of pieces of partial data based on the sub region identified by the identification means, wherein the output means outputs partial data corresponding to the sub region identified by the identification means out of the plurality of pieces of partial data divided by the division means.

7. The information processing apparatus according to claim 1,
wherein the first acquisition means acquires a plurality of pieces of virtual viewpoint information, and
wherein the identification means identifies the sub region of the object, displayed in any of the plurality of pieces of virtual viewpoint images representing views from the plurality of pieces of virtual viewpoints identified based on the plurality of pieces of virtual viewpoint information.

8. The information processing apparatus according to any one of claims 1 to 7, further comprising control means for performing control not to output partial data different from the partial data corresponding to the sub region identified by the identification means out of the three-dimensional shape data acquired by the second acquisition means.

9. An information processing method comprising:
first acquiring for acquiring virtual viewpoint information for identifying a position of a virtual viewpoint and a line-of-sight from the virtual viewpoint;
second acquiring for acquiring three-dimensional shape data of an object;
identifying a sub region of the object to be displayed in a virtual viewpoint image representing a view from the virtual viewpoint, based on the virtual viewpoint information acquired in the first acquiring; and
outputting partial data corresponding to the sub region identified in the identifying out of the three-dimensional shape data acquired in the second acquiring.

10. The information processing method according to claim 9,
wherein the three-dimensional shape data has a plurality of pieces of partial data, and
wherein, in the outputting, partial data including components of the three-dimensional shape data corresponding to the sub region identified in the identifying out of the plurality of pieces of partial data is output.

11. The information processing method according to claim 9, further comprising dividing the three-dimensional shape data acquired in the second acquiring into a plurality of pieces of partial data based on the sub region identified in the identifying, wherein, in the outputting, partial data corresponding to the sub region identified by the identification out of the plurality of pieces of partial data divided by the division is output.

12. The information processing method according to any one of claims 9 to 11, wherein control is performed not to output partial data different from the partial data corresponding to the sub region identified by the identification out of the three-dimensional shape data acquired by the second acquisition.

13. A program for causing a computer to function as the information processing apparatus according to any one of claims 1 to 8.
